# EUROPÄISCHE PATENTANMELDUNG

(11) **EP 2 253 509 A1**
(43) Veröffentlichungstag der Anmeldung: **24.11.2010**
(21) Anmeldenummer: 10159082.6
(22) Anmeldetag: 06.04.2010
(51) Int. Cl.: B60Q 1/48, B62D 15/02, G01S 15/93, G08G 1/16

(54) **Fahrerassistenzverfahren zum Auslösen einer vorbestimmten Aktion in Abhängigkeit eines prädiktiv erfassten Höhenprofils entlang einer Radtrajektorie und korrespondierendes Fahrerassistenzsystem**

(30) Priorität: 19.05.2009 DE 102009003216
(71) Anmelder: Robert Bosch GmbH, 70442 Stuttgart (DE)
(72) Erfinder: Koehler, Markus, 71636, Ludwigsburg (DE); Scherl, Michael, 74321, Bietigheim (DE); Zimmermann, Uwe, 71686, Remseck (DE); Niemz, Volker, 71277, Rutesheim (DE)

(57) **Zusammenfassung**

Die Erfindung betrifft ein Fahrerassistenzverfahren (1) sowie ein Fahrerassistenzsystem (21), gemäß dem ein Höhenprofil einer Fahrbahnoberfläche entlang einer Radtrajektorie erfasst wird, welches mit einem vorbestimmten Höhenprofil (28) verglichen wird und bei Vorhandensein bestimmter Merkmale eine vorbestimmte Aktion (3A) ausgelöst wird.

## Beschreibung

### Technisches Gebiet

Die Erfindung betrifft ein Fahrerassistenzverfahren und ein korrespondierendes Fahrerassistenzsystem, welche den Fahrer beim Erkennen und Bewerten einer Fahrbahnoberfläche unterstützen.

### Stand der Technik

Aus der DE 10 2004 047 478 A1 ist ein Verfahren zur Einparkunterstützung für ein Fahrzeug bekannt, bei dem ein Fahrwiderstand des Fahrzeuges aus Messgrößen abgeleitet wird und eine Begrenzung einer Parklücke ermittelt wird, wenn sich der Fahrwiderstand über ein vorgegebenes Maß hinaus ändert.

Zur Fahrerassistenz sind allgemein unterschiedliche Unterstützungsmöglichkeiten bekannt, welche teilautonom oder autonom in die Längsführung und/oder die Querführung eines Fahrzeuges eingreifen. Als eine Alternative zu einem Eingreifen in ein Fahrverhalten eines Kraftfahrzeuges sind gemäß herkömmlicher Verfahren unterschiedliche Warnfunktionen, welche einen Fahrzeuglenker in kritischen Situationen mittels einer geeigneten Mensch-Maschine-Schnittstelle warnen, bekannt.

### Darstellung der Erfindung

Die Erfindung stellt ein Fahrerassistenzverfahren gemäß Patentanspruch 1 zur Verfügung, welches es erlaubt, in Abhängigkeit eines entlang einer Radtrajektorie prädiktiv erfassten Höhenprofils eine vorbestimmte Aktion auszulösen. Weitere vorteilhafte Ausgestaltungen des Verfahrens sind in den Unteransprüchen 2 bis 9 gegeben.

Des Weiteren stellt die Erfindung ein zum oben genannten Verfahren korrespondierendes Fahrerassistenzsystem zur Verfügung, welches die Merkmale in Anspruch 10 aufweist. Weitere vorteilhafte Ausgestaltungen des Fahrerassistenzsystems sind in den Unteransprüchen 11 und 12 gegeben.

Des Weiteren stellt die Erfindung ein Computerprogrammprodukt gemäß Anspruch 13 zur Durchführung des genannten Verfahrens, sowie einen Datenspeicher gemäß Anspruch 14, welcher das Computerprogrammprodukt abspeichert, zur Verfügung.

Die Erfindung basiert darauf, dass eine gerichtete Sensorik, zum Beispiel ein "Single Beam" Sensor pro Rad, kontinuierlich die Fahrbahnoberfläche vor dem jeweiligen Rad, auch Radtrajektorie genannt, erfasst. Die Sensoren sind dabei derart ausgerichtet, dass sie die zu überfahrende Radtrajektorie sowohl bei einem Vorwärtsfahren als auch bei einem Rückwärtsfahren kontinuierlich abtasten. Aus einem errechneten Abstand des jeweiligen Sensors zu der abgetasteten Fahrbahnoberfläche wird ein Höhenprofil ermittelt. Die Längsführung des Fahrzeuges kann somit in Abhängigkeit des Höhenprofils und optional in Abhängigkeit der Abmessungen des Fahrzeuges prädiktiv angepasst werden. Prädiktiv heißt, dass die Fahrbahnoberfläche in unmittelbar räumlicher Nähe in Fahrtrichtung vor mindestens einem Rad des Fahrzeuges abgetastet wird. Wird ein vorbestimmtes Höhenprofil erkannt, so kann darauf bezüglich der Querführung und/oder der Längsführung des Fahrzeuges reagiert werden. Zum Beispiel kann bei einem Überfahren eines Schlaglochs und/oder einem Überfahren eines Bordsteins die Geschwindigkeit des Fahrzeugs reduziert werden.

Befindet sich zum Beispiel auf einer vorberechneten Einparktrajektorie ein Bordstein, so kann die Querführung des Fahrzeuges mit dem erfindungsgemäßen Verfahren derart verändert werden, dass der Bordstein in einem besonders günstigen Winkel überfahren wird. Ein günstiger Winkel verhindert eine Beschädigung eines Rads, insbesondere einer Felge. Ein vorbestimmtes Höhenprofil kann zum Beispiel aus einem Datenspeicher ausgelesen werden und mit einem erfassten Höhenprofil verglichen werden. Folglich lassen sich mittels eines Vergleichens bestimmte Merkmale des erfassten Höhenprofils interpretieren. Zum Beispiel kann eine Erhöhung, welche parallel zu einer Fahrspur verläuft, als ein Bordstein identifiziert werden. Der Datenspeicher kann auch zusätzliche Informationen, zum Beispiel bezüglich der Abmessungen des Fahrzeuges, bereitstellen.

### Kurze Beschreibung der Zeichnungen

Die Erfindung wird anhand der beiliegenden Figuren näher erläutert.
Es zeigen:
- Fig. 1: ein Ablaufdiagramm einer Ausführungsform des erfin- dungsgemäßen Fahrerassistenzverfahrens,
- Fig. 2: ein Blockschaltbild einer Ausführungsform des erfindungs- gemäßen Fahrerassistenzsystems,
- Fig. 3A, 3B, 3C: ein Erstellen eines Höhenprofils gemäß einer weiteren Aus- führungsform des erfindungsgemäßen Fahrerassistenzver- fahrens,
- Fig. 4: eine beispielhafte Einparktrajektorie, welche ohne Adaption bezüglich eines zu überfahrenden Objektes errechnet wird,
- Fig. 5: eine Einparktrajektorie, welche mit Adaption bezüglich des zu überfahrenden Objektes gemäß einer weiteren Ausfüh- rungsform des erfindungsgemäßen Fahrerassistenzverfah- rens errechnet wird.

### Ausführungsformen der Erfindung

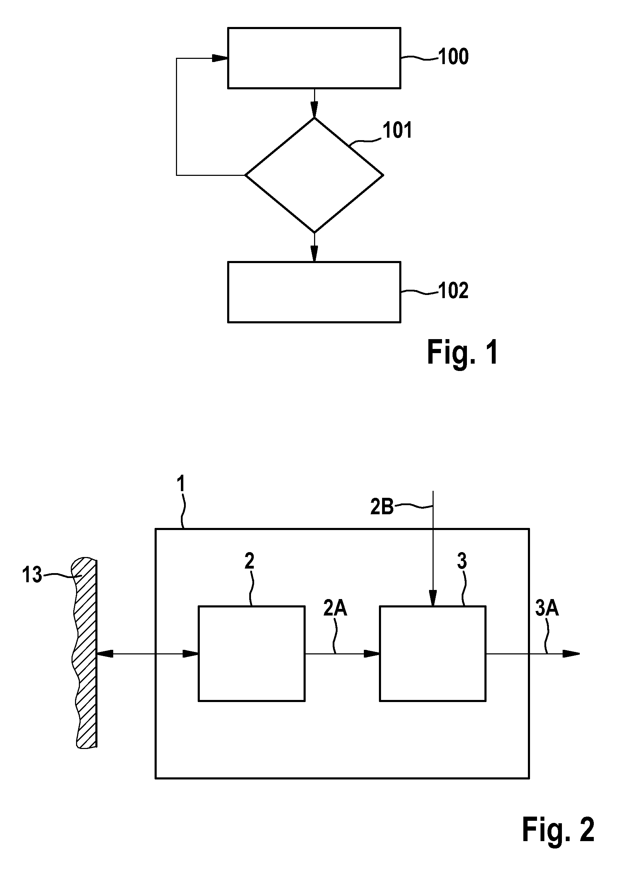

In Figur 1 ist ein Ablaufdiagramm einer Ausführungsform eines erfindungsgemäßen Fahrerassistenzverfahrens dargestellt. Das Fahrerassistenzverfahren weist einen ersten
Verfahrensschritt 100 auf, in dem ein prädiktives Erfassen eines Höhenprofils einer Fahrbahnoberfläche entlang einer Radtrajektorie durchgeführt wird. Entspricht das erfasste Höhenprofil einem vorbestimmten Höhenprofil, so erfolgt in einem weiteren Verfahrensschritt 101 ein Auslösen einer vorbestimmten Aktion. Das Auslösen der vorbestimmten Aktion in Verfahrensschritt 101 erfolgt in Abhängigkeit eines Vergleichens des in Verfahrensschritt 100 prädiktiv erfassten Höhenprofils mit einem vorbestimmten Höhenprofil.

Für den Fall, dass das erfasste Höhenprofil mit einem vorbestimmten Höhenprofil übereinstimmt, so wird in einem darauffolgenden Verfahrensschritt 102 die vorbestimmte Aktion ausgeführt. Stimmt das erfasste Höhenprofil aus Schritt 100 nicht mit einem vorbestimmten Höhenprofil überein, so wird nach der Ausführung des Verfahrensschrittes 101 zu dem Verfahrensschritt 100 zurück verzweigt. Zum Beispiel wird in dem Verfahrensschritt 102 eine Warnfunktion durch ein akustisches oder ein optisches Signal an einen Fahrzeugführer ausgegeben, falls das in Verfahrensschritt 100 erfasste Höhenprofil einem Schlagloch entspricht.

In einer weiteren Ausführungsform des Fahrerassistenzverfahrens erfolgt in Verfahrensschritt 101 ein Auslösen der vorbestimmten Aktion, wenn das Vergleichen des prädiktiv erfassten Höhenprofils mit dem vorbestimmten Höhenprofil in ausgewählten Merkmalen übereinstimmt, z. B. bei einem Vorliegen einer Stufe.

In einer weiteren Ausführungsform des Fahrerassistenzverfahrens erfolgt in Verfahrensschritt 101 ein Auslösen der vorbestimmten Aktion, wenn das prädiktiv erfasste Höhenprofil mit dem vorbestimmten Höhenprofil mindestens zu einer bereitgestellten Vergleichszahl übereinstimmt. Eine Vergleichszahl ist in der vorliegenden Ausführungsform ein Prozentsatz, beispielsweise 80 Prozent. Stimmt das prädiktiv erfasste Höhenprofil mit dem vorbestimmten Höhenprofil mindestens zu dem bereitgestellten Prozentsatz von 80 Prozent überein, so erfolgt in Verfahrensschritt 101 ein Auslösen der vorbestimmten Aktion.

Figur 2 zeigt ein Blockschaltbild einer Ausführungsform des erfindungsgemäßen Fahrerassistenzsystems 1. Es wird eine Fahrbahnoberfläche 13 mittels einer Sensoreinrichtung 2 prädiktiv erfasst, d. h. entlang einer Radtrajektorie in Fahrtrichtung in einem vorbestimmten Abstand vor dem Rad des Fahrzeuges. Die Sensoreinrichtung 2 ist geeignet, aus der erfassten Fahrbahnoberfläche 13 ein Höhenprofil 2A zu erstellen, z. B. durch Auswertung von Ultraschallechos oder des Lichtechos einer optischen Sensorik. Das Höhenprofil 2A wird an eine Auslöseeinrichtung 3 zum Auslösen einer vorbestimmten Aktion 3A übermittelt. Die Auslöseeinrichtung 3 liest ein oder mehrere vorbestimmte Höhenprofile 2B aus und vergleicht diese(s) mit dem erfassten Höhenprofil 2A. Das Höhenprofil 2B kann zum Beispiel mittels eines Datenspeichers bereitgestellt werden.

In einem weiteren Ausführungsbeispiel verfügt die Auslöseeinrichtung 3 über Fahrzeugdaten, welche zum Beispiel die Abmessung des Fahrzeuges beschreiben. Somit ist die Auslöseeinrichtung 3 geeignet, in Abhängigkeit des erfassten Höhenprofils 2A und der Fahrzeugdaten eine vorbestimmte Aktion 3A auszulösen. So kann die Auslöseeinrichtung 3 zum Beispiel ermitteln, ob das Fahrzeug einen aus dem erfassten Höhenprofil 2A erkannten Bordstein ohne Beschädigung einzelner Fahrzeugteile, wie z. B. Frontspoiler oder Heckspoiler, überfahren kann.

Das Ausführen der vorbestimmten Aktion 3A wird durch die Auslöseeinrichtung 3 veranlasst. Die vorbestimmte Aktion 3A umfasst beispielsweise Befehle, welche eine Warnfunktion auslösen. Die Warnfunktion kann akustisch und/oder visuell ausgegeben werden.

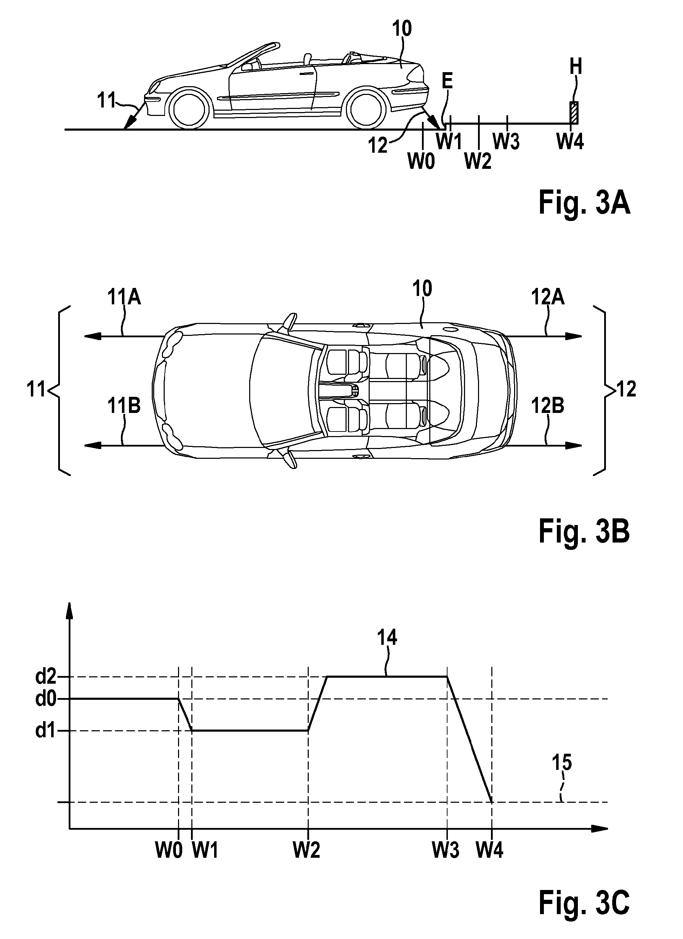

Figur 3A zeigt in einer weiteren Ausführungsform ein Fahrzeug 10, welches über eine vorderseitige und eine rückseitige Sensoreinheit 11 bzw. 12 verfügt. Die Sensoreinheiten 11 und 12 im vorliegenden Ausführungsbeispiel entsprechen der Sensoreinrichtung 2 gemäß Fig. 2. Die Sensoreinheiten 11 und 12 sind geeignet, ein Höhenprofil einer Fahrbahnoberfläche 13 entlang einer jeweiligen Radtrajektorie aller vier Räder mit einem jeweiligen Sensor 11A, 11B, 12A und 12B prädiktiv zu erfassen. Eine beispielhafte Ausrichtung der Sensoren 11A, 11B, 12A und 12B ist in einer Aufsicht auf das Fahrzeug 10 in Figur 3B gezeigt. Weiterhin zeigt die Fig. 3A diejenigen Wegpunkte W0, W1, W2, W3 und W4, welche für ein Erfassen des Höhenprofils 14 gemäß Fig. 3C von Bedeutung sind.

Figur 3C zeigt ein Diagramm, welches den jeweiligen Abstand zwischen der Fahrbahnoberfläche 13 entlang einer Radtrajektorie und einem Sensor 12A oder 12B mittels einer Abstandskurve 14 als Höhenprofil 2A beschreibt. Hierzu sind auf der x-Achse des Diagramms die in Fig. 3A gezeigten Wegpunkte W0, W1, W2, W3 und W4 aufgetragen. Das in Figur 3A gezeigte Fahrzeug 10 befindet sich am Wegpunkt W0. Auf der y-Achse sind die jeweiligen Abstände zwischen Fahrbahnoberfläche 13 und dem Sensor 12A bzw. 12B aufgetragen.

Wie aus dem Diagramm gemäß Fig. 3C hervorgeht, verringert sich die Distanz bei einem Heranfahren des Fahrzeuges 10 an eine Erhöhung E von der Distanz d0 auf die Distanz d1. Das Heranfahren geschieht auf der Wegstrecke zwischen den Wegpunkten W0 und W1. Zwischen Wegpunkten W1 und W2 überragt das Heck des Fahrzeuges 10 die Erhöhung E, so dass die Distanz nur noch d1 beträgt. Bei einem Überfahren der Erhöhung befindet sich das Fahrzeug 10 in einer Schräglage, wodurch ein erhöhter Abstand d2 zwischen der Fahrbahnoberfläche 13 und dem Sensor 12A bzw. 12B hervorgerufen wird.

Bei einem Heranfahren des Fahrzeuges 10 an ein nicht zu überfahrendes Hindernis H am Wegpunkt W4 verringert sich der Abstand sukzessive bis zu einem minimalen Abstand 15. Da bei Überfahren des Wegpunktes W4 eine Kollision mit dem nicht zu überfahrenden Hindernis H erfolgen würde, wird das Fahrzeug 10 vor dem Wegpunkt W4 automatisch gestoppt.

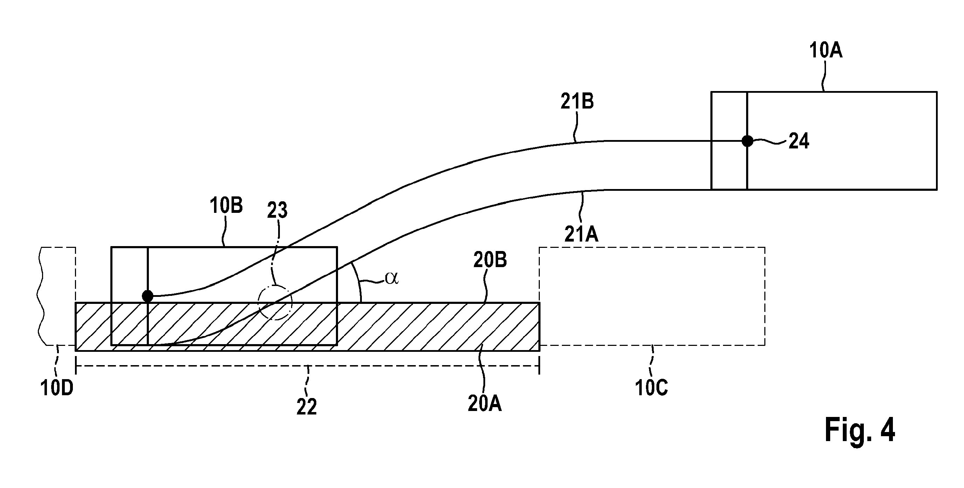

Fig. 4 zeigt eine Einparksituation, bei der eine vorberechnete Einparktrajektorie 21A über einen Bürgersteig 20A in eine Parklücke 22 führt. Die vorliegende Figur 4 dient der Erläuterung der Problematik bei einem Überfahren eines Objektes hinsichtlich eines weiteren Ausführungsbeispiels.

In der vorliegenden Ausführungsform befindet sich die Parklücke 22 zwischen zwei parkenden Autos 10C und 10D. Das Fahrzeug 10 wird entlang der Mittelpunktstrajektorie 21B von der Ausgangsposition 10A in die Parkposition 10B geführt. Die Mittelpunktstrajektorie 21B beschreibt die Einparkspur des Fahrzeuges 10, gemessen an einem Quermittelpunkt 24 des Fahrzeuges 10. Die Einparktrajektorie 21A beschreibt die Einparkspur des Fahrzeuges 10, gemessen in Fahrtrichtung unmittelbar vor einem Rad des Fahrzeuges 10. Die Mittelpunktstrajektorie 21B verläuft somit stets äquidistant zur Einparktrajektorie 21A.

Im vorliegenden Ausführungsbeispiel führt die Einparktrajektorie 21A in einem besonders spitzen Winkel α auf den Bordstein 20B des Bürgersteigs 20A. Das Auftreffen der Einparktrajektorie 21A auf den Bordstein 20B erfolgt an einer in der vorliegenden Fig. 4 mit einem Kreis gekennzeichneten Auftreffstelle 23. Es ist ersichtlich, dass an der Auftreffstelle 23 die Einparktrajektorie 21A in dem besonders spitzen Winkel α , d.h. der Winkel α zwischen Bordstein 20B und der Einparktrajektorie 21A ist kleiner 30°, den Bordstein 20B überfährt. Hierbei kann es zu einer Beschädigung des Reifens bzw. der Felge kommen.

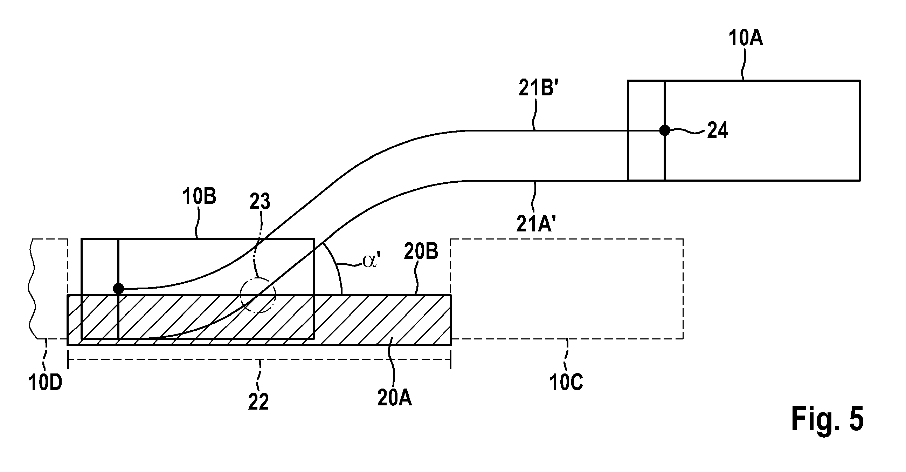

Um eine Beschädigung der Reifen bzw. der Felgen zu vermeiden, errechnet das Fahrerassistenzsystem 1, gemäß der weiteren Ausführungsform, eine optimierte Einparktrajektorie 21A'. Die optimierte Einparktrajektorie 21A' ist in Figur 5 dargestellt.

Figur 5 zeigt ein Einfahren des Fahrzeuges 10 von einer Ausgangsposition 10A in die Parkposition 10B.

In dem vorliegenden Ausführungsbeispiel ist das Fahrerassistenzsystem 1 geeignet, anhand des erfassten Höhenprofils 2A den Auftreffwinkel α zwischen Einparktrajektorie 21A und dem Bordstein 20B an der Stelle 23 zu optimieren. Der optimierte Winkel α ' beträgt mindestens 30°. Hierdurch wird gewährleistet, dass bei einem Überfahren des Bordsteins 20B keine Felge des Fahrzeuges 10 mit dem Bordstein 20B in Berührung kommt. Somit hat das Fahrerassistenzsystem 1 anhand des erfassten Höhenprofils 2A einen Bordstein 20B erkannt, und veranlasst, dass die vorbestimmte Aktion 3A, nämlich ein Optimieren der Einparktrajektorie 21A, durchgeführt wird. Folglich kann das Fahrzeug 10 mittels der durch das Fahrerassistenzsystem 1 optimierten Einparktrajektorie 21A' beziehungsweise 21B' ohne Beschädigung der Felgen zum Parken auf den Bürgersteig 20A auffahren.

In einer weiteren Ausführungsform des erfindungsgemäßen Fahrerassistenzverfahrens ist die vorbestimmte Aktion 3A ein Reduzieren einer Geschwindigkeit des Fahrzeuges 10, derart dass bei dem Auffahren des Fahrzeuges 10 auf den Bordstein 20B keine Beschädigung der Reifen bzw. der Felgen des Fahrzeuges 10 erfolgt.

In einer weiteren Ausführungsform des erfindungsgemäßen Fahrerassistenzverfahrens wird der optimierte Auftreffwinkel α ' in Abhängigkeit einer Reifengröße, einer Felgengröße und/oder einem Radquerschnitt des Fahrzeuges 10 berechnet.

In einer weiteren Ausführungsform unterstützt das erfindungsgemäße Fahrerassistenzverfahren eine automatische Einparkhilfe, welche das Fahrzeug 10 ohne Eingreifen des Fahrers in die Parklücke 22 führt. Das Fahrzeug 10 fährt rückwärts auf den Bordstein 20B auf. Die optimierte Einparktrajektorie 21A' beschreibt somit die Radtrajektorie des rechten Hinterrads des Fahrzeuges 10. Bei einem Auftreffen des Fahrzeuges 10 auf den Bordstein 20B erfolgt erfindungsgemäß keine Lenkrad- beziehungsweise Radführung, da sonst die Beschädigungsgefahr eines Reifens beziehungsweise einer Felge des Fahrzeuges 10 erhöht ist.

In einer weiteren Ausführungsform unterstützt das erfindungsgemäße Fahrerassistenzverfahren eine automatische Einparkhilfe, wobei bei dem Auftreffen des vorderen Rads des Fahrzeuges 10 auf den Bordstein eine Übernahme des Lenkrads durch den Fahrer erfolgt. Somit erfolgt keine automatische Lenkbewegung, wodurch sichergestellt wird, dass die elektronische Lenkmechanik des Fahrzeuges 10 nicht überbeansprucht wird. Die Lenküberbeanspruchung bei einer automatischen Lenkführung kann aufgrund der Blockierung der Lenkbewegung durch den Bordstein 20B oder durch zusätzliche Reibkräfte hervorgerufen werden.

In einer weiteren Ausführungsform wird ein abstandsmessender optischer Sensor verwendet, so dass zusätzlich zum Höhenprofil der Fahrbahnoberfläche auch Linien (z.B. Parkraumbegrenzungen) erfasst werden können und eine Positionierung beim Einparken relativ zu derartigen erfassten Linien durchgeführt werden kann.

## Patentansprüche

1. Fahrerassistenzverfahren, wobei ein prädiktives Erfassen (100) eines Höhenprofils (2A) einer Fahrbahnoberfläche (13) entlang einer Radtrajektorie durchgeführt wird und wobei eine vorbestimmte Aktion (3A) ausgelöst (101) wird, falls ein vorbestimmtes Höhenprofil (2B) erfasst wird.

2. Verfahren nach Anspruch 1, wobei in Abhängigkeit mindestens eines Merkmals des erfassten Höhenprofils (2A) mindestens ein Steuerbefehl aus einer bereitgestellten Menge von Steuerbefehlen zum automatischen Steuern einer Fahrzeugfunktion ausgewählt wird.

3. Verfahren nach Anspruch 2, wobei der Steuerbefehl eine Änderung einer Fahrgeschwindigkeit und/oder eine Änderung der Radtrajektorie veranlasst.

4. Verfahren nach Anspruch 3, wobei die Radtrajektorie eine Einparktrajektorie (21A) aufweist, welche über einen Bordstein (20B) führt und die Einparktrajektorie (21A) derart angepasst wird, dass sie in einem vorberechneten Winkel α ' über den Bordstein (20B) führt.

5. Verfahren nach Anspruch 4, wobei der Winkel α ' in Abhängigkeit einer Reifengröße, einer Felgengröße und/oder einem Radquerschnitt berechnet wird.

6. Verfahren nach einem der Ansprüche 1 bis 5, wobei das Höhenprofil (2A) entlang der Radtrajektorie unmittelbar vor einem Rad eines Fahrzeuges (10) erfasst wird.

7. Verfahren nach einem der Ansprüche 1 bis 6, wobei in Abhängigkeit von mindestens einem erfassten Merkmal der Fahrbahnoberfläche (13) ein weiteres nicht erfasstes Merkmal der Fahrbahnoberfläche (13) geschätzt wird.

8. Verfahren nach einem der Ansprüche 1 bis 7, wobei das Höhenprofil (2A) mittels Ultraschall und/oder Mikrowellen und/oder optischer Sensorik erfasst wird.

9. Verfahren nach einem der Ansprüche 1 bis 8, wobei in Abhängigkeit eines Merkmals des Höhenprofils (2A) und/oder eines Merkmals des Fahrzeuges (10) ein Warnsignal ausgeben wird.

10. Fahrerassistenzsystem (1), mit:
einer Sensoreinrichtung (2) zum prädiktiven Erfassen (100) eines Höhenprofils (2A) einer Fahrbahnoberfläche (13) entlang einer Radtrajektorie; und
einer Auslöseeinrichtung (3) zum Auslösen einer vorbestimmten Aktion (3A) in Abhängigkeit eines Erfassens eines vorbestimmten Höhenprofils (2B) durch die Sensoreinrichtung (2).

11. Fahrerassistenzsystem (1) nach Anspruch 10, wobei die vorbestimmte Aktion (3A) ein Ausgeben eines Warnsignals ist.

12. Fahrerassistenzsystem (1) nach Anspruch 10, wobei die vorbestimmte Aktion (3A) ein Übermitteln eines Steuerbefehls zum automatischen Steuern einer Fahrzeugfunktion an eine Steuereinheit ist.

13. Computerprogrammprodukt zur Durchführung des Verfahrens nach einem der Ansprüche 1 bis 9.

14. Datenspeicher, welcher das Computerprogrammprodukt nach Anspruch 13 abspeichert.
